# EUROPEAN PATENT SPECIFICATION

(11) **EP 2 239 513 B1**
(45) Date of publication and mention of the grant of the patent: **07.03.2018**
(21) Application number: 10250512.0
(22) Date of filing: 19.03.2010
(51) Int. Cl.: F24D 3/18, F24D 11/02, F24D 19/10, F24F 11/06, F24F 1/00

(54) **Hot water circulation system with a heat pump**
Heißwasserzirkulationssystem mit einer Wärmepumpe
Système de circulation d'eau chaude avec une pompe à chaleur

(30) Priority: 30.03.2009 KR 20090027016
(43) Date of publication of application: 13.10.2010
(73) Proprietor: LG Electronics Inc., Seoul (KR)
(72) Inventor: Han, Wang Kuk, Changwon City Gyoungsangnam-do, 641-711 (KR); Lee, Ju Hyeong, Changwon City Gyoungsangnam-do, 641-711 (KR)
(74) Representative: Boult Wade Tennant

(56) References cited:
- WO-A2-2007/136173
- US-A- 4 055 963
- US-A- 4 308 723
- US-A- 4 493 193

## Description

### BACKGROUND

The present disclosure relates to a hot water circulation system associated with a heat pump, which can perform floor heating, hot water supply, and multi-space heating simultaneously.

A heater assembly for supplying hot water and heating indoor spaces is formed by a combination of a heat pump cycle and a hot water circulation cycle. The heater assembly supplies the hot water and heats the floor by allowing refrigerant discharged from a compressor of a heat pump refrigerant circuit to heat-exchange with the water.

Since a water-refrigerant heat exchanger for the heat exchange between the refrigerant and the water has lower heat-exchange efficiency, it is difficult to attain an enough amount of heat for heating the water and floor.

Therefore, a sub-heater that generates heat using electric power is further provided. The sub-heater is received in a heater storage container in which the water is stored. The inside of the heater storage container communicates with a side of a water outlet portion of the water-refrigerant heat exchanger.

A plurality of heat generating elements that re-heat the water by contacting the water are provided in the sub-heater.

However, the typical hot water circulation system associated with the heat pump has following limitations.

Evaporation of the refrigerant is not effectively realized in a cold front area and thus heat-exchange efficiency is deteriorated.

Due to the low heat-exchange efficiency, only one of the floor heating and hot water supply should be performed and thus use convenience is deteriorated.

US4493193 (A) discloses a system according to the preamble of claim 1, comprising a reversible mode heating and cooling system arranged for selective parallel or simultaneous parallel and series flow of refrigerant through the auxiliary heat exchanger and outdoor heat exchanger to enhance the heating efficiency of the system at very low outdoor ambient temperatures.

US4308723 (A) discloses a heat pump apparatus for conditioning a fluid having a fluid handler for circulating the fluid in heat exchange relationship with a refrigerant fluid.

### SUMMARY OF THE INVENTION

According to the present invention, there is provided a hot water circulation system as set out in claim 1.

Embodiments provide a hot water circulation system associated with a heat pump, which can perform floor heating, hot water supply, and multi-space heating simultaneously.

In one embodiment, a hot water circulation system associated with a heat pump includes: an outdoor unit including a heat pump refrigerant cycle; an indoor unit for air-conditioning an indoor space by allowing refrigerant to heat-exchange with indoor air; and a refrigerant heating apparatus that is selectively connected to the outdoor unit and heats the refrigerant in the heat pump refrigerant cycle in an extreme cold front area, wherein the refrigerant heating apparatus heats the refrigerant by heating the water circulating a water heating passage, which is a closed-circuit along which the water circulates, using a heating source and allowing the heated water to heat-exchange with the refrigerant in the heat pump refrigerant cycle.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a view of a hot water circulation system associated with a heat pump according to an embodiment;
FIG. 2 is a view of an outdoor unit of the hot water circulation system of FIG. 1;
FIG. 3 is a view of a heat recovery unit of the hot water circulation system of FIG. 1;
FIG. 4 is a view illustrating a hot water supply unit and a water-heat heating unit of the water circulation system associated with the refrigerant cycle of FIG. 1;
FIG. 5 is a view of a refrigerant heating unit of the hot water circulation system of FIG. 1;
FIG. 6 is a view illustrating flows of refrigerant and water when the hot water circulation system operates in a heating mode according to an embodiment;
FIG. 7 is a view illustrating flows of refrigerant and water when the hot water circulation system operates in a heating mode according to another embodiment;
FIG. 8 is a view illustrating flows of refrigerant and water in a defrosting mode of the hot water circulation system;
FIG. 9 is a view illustrating flows of refrigerant and water when the hot water circulation system operates in a heating mode according to another embodiment;
FIG. 10 is a view illustrating flows of refrigerant and water in the heating mode after the hot water circulation system has been left off for a long time;
FIG. 11 is a view illustrating flows of refrigerant and water in a cooling mode of the hot water circulation system; and
FIG. 12 is a view of a hot water circulation system associated with a heat pump according to another embodiment.

### DETAILED DESCRIPTION OF THE INVENTION

Reference will now be made in detail to the embodiments of the present disclosure, examples of which are illustrated in the accompanying drawings.

In the following detailed description of the preferred embodiments, reference is made to the accompanying drawings that form a part hereof, and in which is shown by way of illustration specific preferred embodiments in which the invention may be practiced. These embodiments are described in sufficient detail to enable those skilled in the art to practice the invention, and it is understood that other embodiments may be utilized and that logical structural, mechanical, electrical, and chemical changes may be made without departing from the spirit or scope of the invention. To avoid detail not necessary to enable those skilled in the art to practice the invention, the description may omit certain information known to those skilled in the art. The following detailed description is, therefore, not to be taken in a limiting sense, and the scope of the present invention is defined only by the appended claims.

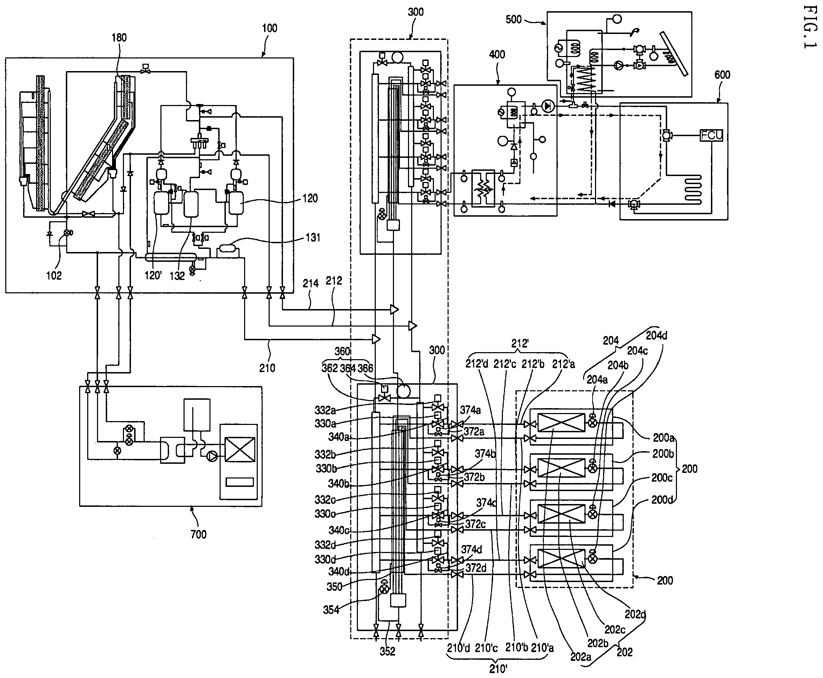

FIG. 1 is a view of a hot water circulation system associated with a heat pump according to an embodiment.

Referring to FIG. 1, a water circulation system of an embodiment includes at least one outdoor unit 100 including a heat pump refrigerant cycle, a plurality of indoor units 200, a heat recovery unit 300 that is disposed between the outdoor unit 100 and the indoor unit 200 to control the flow of the refrigerant, a water-heat exchanger 400 for heating water through heat exchange between the refrigerant and the water, a hot water supply unit 500 that is connected to the water-heat exchanger 400 to supply the warm/hot water, a water-heat heating unit 600 having a water piper extending from the water-heat exchanger 400, a refrigerant heating apparatus 700 that is connected to the heat pump refrigerant cycle to selectively heat the water.

That is, the hot water circulation system associated with the heat pump may operate to selectively or simultaneously perform the hot water supply and the floor heating. In addition, the water circulation system may operate such that the indoor units 200 simultaneously or partly perform the cooling/heating operation through the refrigerant flow control of the heat recovery unit 300.

In addition, the refrigerant heating apparatus 700 is designed to enhance the heating efficiency by selectively heating the refrigerant in the heating mode after it has been left off in the extreme cold front area.

The outdoor unit 100 is generally installed at an outdoor side and includes the constant speed compressor 120, the inverter compressor 120' that is a variable speed heat pump, an accumulator 132, the outdoor heat exchanger 180, and the linear expansion valve.

Further, the indoor unit 200 is installed in an indoor space of a building to control the indoor air by directly discharging the air to the indoor space.

Disposed between the outdoor unit 100 and the heat recovery unit 300 are a liquid pipe 210 that is a single pipe along which a liquid-phase refrigerant flows, a high pressure gas pipe 214 along which a high pressure gas-phase refrigerant flows, and a low pressure gas pipe 212 along which a low pressure gas-phase refrigerant flows.

The indoor units 200 are provided with an indoor liquid pipe 210' along which the liquid-phase refrigerant flows and an indoor gas pipe 212' along which the gas-phase refrigerant flows. The indoor liquid pipe 210' and the indoor gas pipe 212' are installed communicating with the liquid pipe 210, high pressure gas pipe 214, and low pressure gas pipe 212.

The indoor units 200 may have different properties and structures. Accordingly, Diameters of the indoor liquid pipe 210' and the indoor gas pipe 212' may vary depending on a capacity of the indoor unit 200 connected thereto.

That is, the indoor units 200 include a first indoor unit 200a, a second indoor unit 200b, a third indoor unit 200c, and a fourth indoor unit 200d. First, second, third, and fourth indoor gas pipes 212'a, 212'b, 212'c, and 212'd are respectively connected to the first indoor unit 200a, second indoor unit 200b, third indoor unit 200c, and fourth indoor unit 200d to guide the flow of the refrigerant. First, second, third, and fourth indoor liquid pipes 210'a, 210'b, 210'c, and 210'd are further respectively connected to the first indoor unit 200a, second indoor unit 200b, third indoor unit 200c, and fourth indoor unit 200d to guide the flow of the refrigerant.

The indoor units 200, indoor liquid pipes 210', and indoor gas pipes 212' may have different sizes and capacities.

Meanwhile, the expansion valves 204 provided on the indoor units 200 controls the refrigerant directed to the respective indoor heat exchangers 202. That is, the first indoor unit 200a includes a first indoor heat exchanger 202a and a first expansion valve 204a and the second indoor unit 200b includes a second indoor heat exchanger 202b and a second expansion valve 204b. In addition, the third air condition indoor unit 200c includes a third indoor heat exchanger 202c and a third expansion valve 204c and the fourth indoor unit 200d includes a fourth indoor heat exchanger 202d and a fourth expansion valve 204d. Therefore, the expansion valves 204 may be differently controlled depending on user's selection and adjust flow rate of the refrigerant directed into the indoor heat exchangers 202.

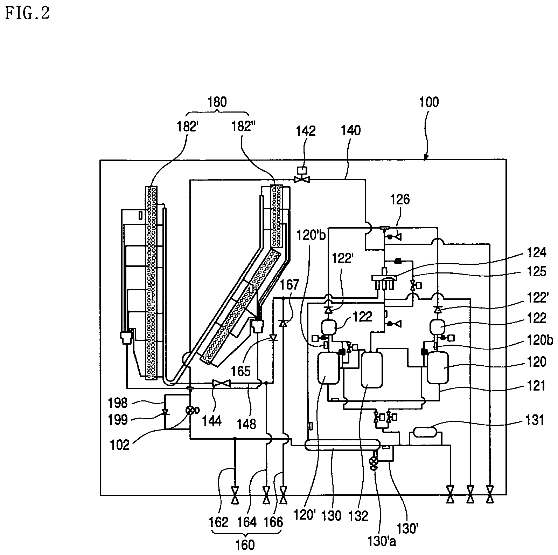

The outdoor unit will be described in more detail hereinafter with reference to FIG. 2.

FIG. 2 is a view of the outdoor unit of the hot water circulation system of FIG. 1.

A fluid equalizing pipe 121 is installed between the constant speed compressor 120 and the inverter compressor 120' to connect the constant speed compressor 120 to the inverter compressor 120'. Accordingly, when there is a shortage of fluid supply in one of the compressors 120 and 120', the other of the compressors 120 and 120' compensates for the shortage of the fluid to prevent the damage of the compressors 120 and 120', which may be caused by the shortage of the fluid supply.

Scroll compressors that have low noise and excellent efficiency are used as the compressors 120 and 120'. Especially, the inverter compressor 120' may be an inverter scroll compressor whose RPM is adjusted depending on a load capacity. Therefore, when the number of the indoor units 200 operating is small and thus the load capacity is small, the inverter compressor 120' first operates. In this state, when the load capacity is gradually increased and thus the inverter compressor 120' cannot afford the increased load capacity, the constant speed compressor 120 additionally operates.

Compressor discharge temperature sensors 120b and 120'b for measuring a temperature of the refrigerant discharged from the compressors 120 and 120' and an oil separator 122 are provided at outlet sides of the constant speed compressor 120 and the inverter compressor 120'. The oil separator 122 separates oil from the refrigerant discharged from the compressors 120 and 120' and recovers the separated oil to the compressors 120 and 120;.

That is, in order to dissipate frictional heat generated when the compressors 120 and 120' operate, the oil together with the refrigerant is discharged through outlets of the compressors 120 and 120'. The oil contained in the refrigerant is separated from the refrigerant by the oil separator 122 and returned to the compressors 120 and 120'.

A backflow prevention valve 122' is further installed on the outlet side of the oil separator 122 to prevent the refrigerant from flowing back. That is, when only one of the constant speed compressor 120 and the inverter compressor 120' operates, the backflow prevention valve 122' prevents the compressed refrigerant from flowing back toward the other of the compressors 120 and 120'.

The oil separator 122 is designed to communicate with a four-way valve 124 through a pipe. The four-way valve 124 is installed to switch a flow direction of the refrigerant depending on the operation mode. Four ports of the four-way valve 124 are respectively connected to an outlet (or the oil separator) of the compressors 120 and 120' and an inlet (or the accumulator) of the compressors 120 and 120', the outdoor heat exchanger 180, and the indoor unit 200.

Therefore, the refrigerants discharged from the compressors 120 and 120' are collected together and directed into the four-way valve 124.

Meanwhile, a hot gas pipe 125 for directly directing a part of the refrigerant, which is being introduced into the four-way valve, to the accumulator 132 is disposed across the four-way valve 124.

When there is a need to increase pressure of the low pressure refrigerant introduced into the accumulator 132, the hot gas pipe 125 allows the high pressure refrigerant of the outlet side to be directly supplied to the inlet side of the compressors 120 and 120'.

A high pressure sensor 126 is provided above the hot gas pipe 125. The high pressure sensor 126 is for measuring pressure of the refrigerant compressed in the compressor 120. That is, the high pressure sensor 126 allows the heat pump refrigerant cycle to compare the pressure of the refrigerant with a preset target pressure for improving the heat-exchange efficiency.

Accordingly, the high pressure sensor 126 cooperates with a bypass valve 142 that will be described hereinbelow. That is, when the pressure of the refrigerant measured by the high pressure sensor 126 is less than the target pressure, the bypass valve 142 is opened to increase the pressure of the refrigerant.

An outdoor over-cooler 130 is provided at the outlet side of the outdoor heat exchanger 180. The outdoor over-cooler 130 further cools the refrigerant heat-exchanging by the outdoor heat exchanger 180. The outdoor over-cooler 130 is located at a certain location of the liquid pipe 210.

The outdoor over-cooler 130 is formed with a dual-pipe. That is, the outdoor over-cooler 130 includes an inner pipe (not shown) communicating with the liquid pipe 210 and an outer pipe (not shown) communicating with a reverse transfer pipe 120' and disposed around the inner pipe.

Meanwhile, the reverse transfer pipe 130' communicates with the liquid pipe 210 formed at the outlet of the outdoor over-cooler 130. The reverse transfer pipe 130' functions to allow the refrigerant discharged from the outdoor heat exchanger 180 and flowing through the liquid pipe 210 to reversely flow to the outer pipe (not shown).

An over-cooling expansion valve 130'a for converting the liquid-phase refrigerant into a low temperature gas-phase refrigerant by expanding the liquid-phase refrigerant is installed on the reverse transfer pipe 130'. The over-cooling expansion valve 130'a adjusts an amount of the refrigerant reversely flowing through the reverse transfer pipe 130'.

Accordingly, the refrigerant passing through the outdoor over-cooler 130 is adjusted to a desired temperature. That is, as the amount of the refrigerant reversely flowing through the reverse transfer pipe 130' increases, the temperature of the refrigerant passing through the outdoor over-cooler 130 is reduced.

By the above-described structure, when a part of the refrigerant discharged from the outdoor over-cooler 130 is introduced into the reverse transfer pipe 130', the refrigerant is converted into the low temperature gas-phase refrigerant by expanding through the over-cooling expansion valve 130'a. The low temperature gas-phase refrigerant flows reversely through the outer pipe (not shown) of the outdoor over-cooler 130 and heat-exchanges with the liquid-phase refrigerant flowing along the inner pipe (not shown), thereby further cooling the liquid-phase refrigerant.

As described above, the liquid-phase refrigerant discharged from the outdoor heat exchanger 180 is further cooled by heat conduction through the outdoor over-cooler 130 and supplied to the indoor unit 200. The reverse refrigerant discharged from the outer pipe of the outdoor over-cooler 130 is supplied to the compressors 120 and 120' through the accumulator 132.

A drier 131 is installed at a side of the outdoor over-cooler 130, i.e., at a side of the liquid pipe 210 along which the refrigerant discharged from the outdoor heat exchanger 180 is guided. The drier 131 functions to remove moisture from the refrigerant flowing along the liquid pipe 210.

The accumulator 132 is disposed between the constant speed compressor 120 and the inverter compressor 120'. The accumulator 132 filters off the liquid-phase refrigerant to allow only the gas-phase refrigerant to be introduced into the compressors 120 and 120'.

That is, among the refrigerant introduced from the indoor unit 200, if the liquid-phase refrigerant that is not evaporated is directly introduced into the compressors 120 and 120', the load of the compressors 120 and 120' increases, thereby damaging the compressors 120 and 120'.

Accordingly, since a weight of the liquid-phase refrigerant among the refrigerant introduced into the accumulator 132 is relatively greater than the gas-phase refrigerant, the liquid-phase refrigerant is stored at a lower portion of the accumulator 132 and only the gas-phase refrigerant at an upper portion of the accumulator 132 is introduced into the compressors 120 and 120'.

The outdoor heat exchanger 180 is provided in the outdoor unit 100. The outdoor heat exchanger 180 allows the refrigerant flowing therein to heat-exchange with the external air. The outdoor heat exchanger 180 includes a vertical portion 182' that is elected at a right angle with respect to a ground for the heat exchange between the refrigerant flowing along the outdoor heat exchanger 180 and the external air and an inclined portion 182" inclined rightward from the vertical portion 182' at a predetermined angle.

A cooling-only pipe 198 is provided at a lower portion of the outdoor heat exchanger 180. The cooling-only pipe 198 is designed to guide the flow of the refrigerant in the cooling mode of the heat pump refrigerant cycle. A first check valve 199 for preventing the refrigerant flowing backward is provided at a side of the cooling-only pipe 198.

The bypass pipe 140 is provided between the outdoor heat exchanger 180 and the four-way valve 124. The bypass pipe 140 is configured to selectively supply the high temperature/high pressure refrigerant into the outdoor heat exchanger 180. A bypass valve 142 for selectively checking the bypass pipe 140 at a side of the bypass pipe 142.

In more detail, when the hot water circulation system associated with the heat pump operates in a defrosting mode or operates in the heating mode after leaving without operation for long time, the pressure of the refrigerant compressed by the compressor 120 and measured by the high pressure sensor 126 is less than the target pressure and thus the refrigerant compressed by the compressor 120 bypasses toward the lower portion of the outdoor heat exchanger 180 through the bypass pipe 140.

At this point, the target pressure may vary depending on loads of the hot water supply unit 500, and water-heat heating unit 600.

In addition, a bypass guide valve 144 is provided under the outdoor heat exchanger 180 to block the refrigerant flow direction so that the refrigerant is directed into the outdoor heat exchanger 180 through the bypass pipe 140.

The bypass guide valve 144 communicates with the bypass pipe 140 and is installed at a side of the outdoor discharge pipe 148 guiding the refrigerant discharged from the outdoor heat exchanger 180 to the four-way valve.

Accordingly, when the bypass guide valve 144 is closed and the bypass valve 142 is opened to direct a part of the refrigerant discharged from the compressor 120 into the outdoor discharge pipe 148 through the bypass pipe 140, the refrigerant cannot be directed to the four-way valve 124 but introduced into the outdoor heat exchanger 180.

A refrigerant heating pipe 160 for guiding the refrigerant flow between the outdoor unit 100 and the refrigerant heating apparatus 700 is provided between the outdoor unit 100 and the refrigerant heating apparatus 700. In addition, the refrigerant heating pipe 160 is connected between the outdoor linear expansion valve 102 and the outdoor over-cooler 130 and communicates with the outdoor discharge pipe 148.

That is, the refrigerant heating pipe 160 includes a first refrigerant pipe 162 for guiding the refrigerant between the outdoor linear expansion valve 102 and the outdoor over-cooler 130 to the refrigerant heating apparatus 700, a second refrigerant pipe 164 for guiding the refrigerant from the outdoor discharge pipe 148 to the refrigerant heating apparatus 700, and a third refrigerant pipe 166 for guiding the refrigerant from the refrigerant heating apparatus 700 to the outdoor discharge pipe 148.

In addition, check valves 165 and 167 are provided at sides of the second refrigerant pipe 164 and the third refrigerant pipe 166 to control a flow direction of the refrigerant.

That is, the second and third check valves 165 and 167 functions to allow the refrigerant to flow only in one direction.

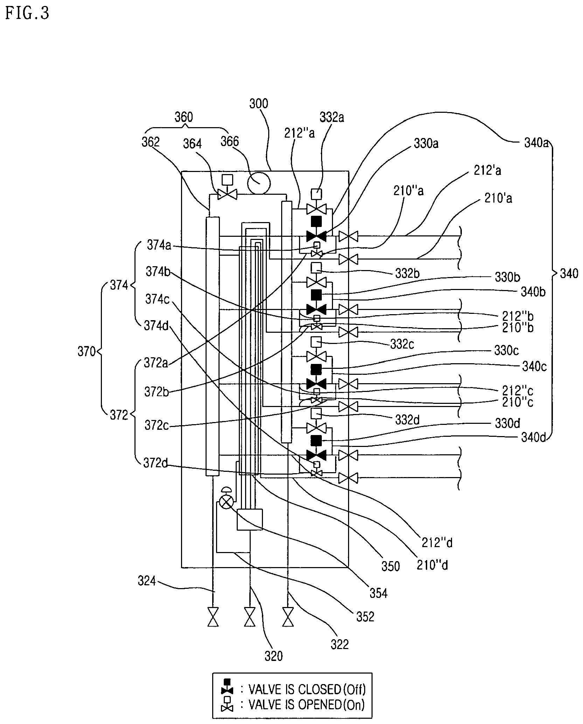

The following will describe the heat recovery unit with reference to FIG. 3.

FIG. 3 is a view of the heat recovery unit of the hot water circulation system of FIG. 1.

Referring to FIG. 3, the heat recovery unit 300 includes first and second heat recovery units that are respectively disposed between the outdoor unit 100 and the indoor unit 200 and between the outdoor unit 100 and the water-heat exchanger 400. The first and second heat recovery units are connected to each other.

Accordingly, the heat recovery unit 300 allows the refrigerant to be directed to the water-heat exchanger 400 and the indoor unit 200 by controlling the flow direction of the refrigerant, thereby enabling the indoor unit 200 to selectively operate in the heating and cooling modes.

A liquid connection pipe 320, high pressure connection pipe 322, and low pressure connection pipe 324 are respectively connected to the liquid pipe 210, high pressure gas pipe 213, and low pressure gas pipe 212 at a side of the heat recovery unit 300.

That is, the liquid connection pipe 320 is connected to the liquid pipe 210 and the high pressure connection pipe 322 is connected to the high pressure gas pipe 214. In addition, the low pressure connection pipe 324 is connected to the low pressure gas pipe 212.

An indoor connection gas pipe 212" and indoor connection liquid pipe 210" that are respectively connected to the indoor gas pipe 212' and the indoor liquid pipe 210' are provided on the heat recovery unit 300 to guide the flow of the refrigerant.

A plurality of main valves 330 and a plurality of sub-valves 332 that are bypass valves are installed on the indoor connection gas pipe 212". That is, as shown in FIG. 3, a first main valve 330a is installed on a first indoor connection gas pipe 212" a connected to the first indoor gas pipe 212'a of the first indoor unit 200a and a second main valve 330b is installed on a second indoor connection gas pipe 212"b connected to a second indoor gas pipe 212'b of the second indoor unit 200b.

In addition, a third main valve 330c is installed on a third indoor connection gas pipe 212"c connected to the third indoor gas pipe 212'c of the third indoor unit 200c and a fourth main valve 330d is installed on a fourth indoor connection gas pipe 212"d connected to the fourth indoor gas pipe 212'd of the fourth indoor unit 200d.

Accordingly, when the hot water circulation system associated with the refrigerant cycle operates in the cooling or heating mode, the main valves 330a, 330b, 330c, and 330d and the sub-valves 332a, 332b, 332c, and 332d are selectively opened. In the cooling/heating mode conversion, all of the main valves 330a, 330b, 330c, and 330d and all of the sub-valves 332a, 332b, 332c, and 332d are closed for a predetermined time, for example, for about 2-3 minutes.

This is to reduce colliding impact between the high pressure refrigerant and the low pressure refrigerant when the flow direction of the refrigerant changes in the cooling/heating mode conversion.

Meanwhile, branch pipes 340 are branched off from the indoor connection gas pipes 212" in the heat recovery unit 300. That is, a first branch pipe 240a is branched off from the first indoor connection gas pipe 212"a and the first sub-valve 332a is installed on the first branch pipe 240a to control the refrigerant passing through the first branch pipe 340a.

Second, third, and fourth branch pipes 340b, 340c, and 340d are respectively branched off from the second, third, and fourth indoor connection gas pipes 212"b, 212"c, and 212"d and second, third, and fourth sub-valves 332, 332c, and 332d are respectively provided on the second, third, and fourth branch pipes 340b, 340c, and 340d.

The branch pipes 340 are connected to the high pressure connection pipe 322. That is, each of the branch pipes 340 has a first end connected to the indoor connection gas pipe 212" and a second end connected to the high pressure gas pipe 214. Accordingly, when the sub-valves 332 are opened, the indoor gas pipe 212' is connected to the high pressure gas pipe 214.

The heat recovery unit 300 further includes a simultaneous over-cooler 350. The simultaneous over-cooler 350 operates in the case where the heating and cooling are simultaneously performed, thereby further improving the cooling efficiency. The simultaneous over-cooler 350 is connected to the liquid pipe 210 and formed of a dual-pipe so that the refrigerant flowing along the liquid pipe 210 is further cooled.

Although not shown in the drawings, the liquid pipe 210 in the simultaneous over-cooler 350 may be spirally formed to improve the cooling speed and efficiency.

A detour pipe 352 branched off from the liquid pipe 210 is further formed at a lower portion of the simultaneous over-cooler 350. An over-cooling adjusting valve 354 is provided on the detour pipe 352. The over-cooling adjusting valve 354 is opened in the cooling/heating simultaneous operation, thereby further cooling the refrigerant flowing along the liquid pipe 210. That is, the gas/liquid-phase refrigerant flowing along the liquid pipe 210 is cooled by the simultaneous over-cooler 350 and thus fully phase-changed into the liquid-phase refrigerant.

A condensed liquid removing unit 360 is further provided in the heat recovery unit 300. The condensed liquid removing unit 360 includes a refrigerant connection pipe 362 connecting the high pressure gas pipe 214 to the low pressure gas pipe 212, a connection pipe opening/closing valve 364 controlling flow of the refrigerant flowing along the refrigerant connection pipe 362, and a capillary tube 366 expanding the refrigerant flowing along the refrigerant connection pipe 362.

The connection pipe opening/closing valve 364 opens the refrigerant connection pipe 362 in an all-room cooling mode (i.e., in the case where all of the indoor units operate in the cooling mode). The refrigerant flowing along the refrigerant connection pipe 362 expands by the capillary tube 366. Accordingly, in the all-room cooling mode, the liquid-phase refrigerant condensed in the high pressure gas pipe 214 expands and is recovered to the low pressure gas pipe 212.

Meanwhile, a refrigerant detouring unit 370 is further provided in the heat recovery unit 300. The refrigerant detouring unit 370 functions to reduce the colliding impact by detouring the refrigerant when the refrigerant staying before the cooling/heating conversion of the indoor units 200 collides with the refrigerant flowing after the cooling/heating conversion.

That is, when the high pressure refrigerant collides with the low pressure refrigerant, the refrigerant detouring unit 370 detours the refrigerant to compensate for the pressure difference, thereby reducing noise that is generated in the cooling/heating conversion.

To this end, the refrigerant detouring unit 370 includes a refrigerant detouring pipe 372 having a first end communicating with the low pressure connection pipe 324 and a second end communicating with the indoor connection gas pipe 212" and a refrigerant detouring valve 374 for selectively opening and closing the refrigerant detouring pipe 372.

In more detail, the first to fourth indoor connection gas pipes 212"a to 212"d include refrigerant detouring pipes 372a, 372b, 372c, and 372d and refrigerant detouring valves 374a, 374b, 374c, and 374d, respectively.

In the all-room cooling mode, when one of the rooms operates in the heating mode, the refrigerant detouring valves 374a, 374b, 374c, and 374d are identically opened and closed to the sub-valves 332a, 332b, 332c, and 332d.

Accordingly, the refrigerant staying in the branch pipes 340a, 340b, 340c, and 340d in the state where the sub-valves 332a, 332b, 332c, and 332d and the refrigerant detouring valves 374a, 374b, 374c, and 374d are closed in the cooling mode collides with the refrigerant that is introduced from the outdoor unit 100 into the branch pipes 340a, 340b, 340c, and 340d as the sub-valves 332a, 332b, 332c, and 332d and the refrigerant detouring valves 374a, 374b, 374c, and 374d are opened when the mode is converted into the heating mode. At this point, since a part of the refrigerant is detoured to the refrigerant detouring pipes 372a, 372b, 372c, and 372d, thereby reducing the colliding impact.

The above-described structure of the heat recovery unit 300 is applied to both of a pair of the heat recovery units shown in FIG. 1. However, since the heat recovery unit 300 located at an upper side is connected to the water-heat exchanger 400, only one of the indoor gas pipes 212' and only one of the indoor liquid pipes 210' may be connected to the heat recovery unit 300 located at the upper side.

Needless to say, the indoor unit 200 and the water-heat exchange unit 400 may be further connected to the rest of the indoor units 212' and the indoor liquid pipes 210'.

The water-heat exchanger 400, the hot water supply unit 500, and the water-heat heating unit 600 are further provided at the right side of the heat recovery unit 300.

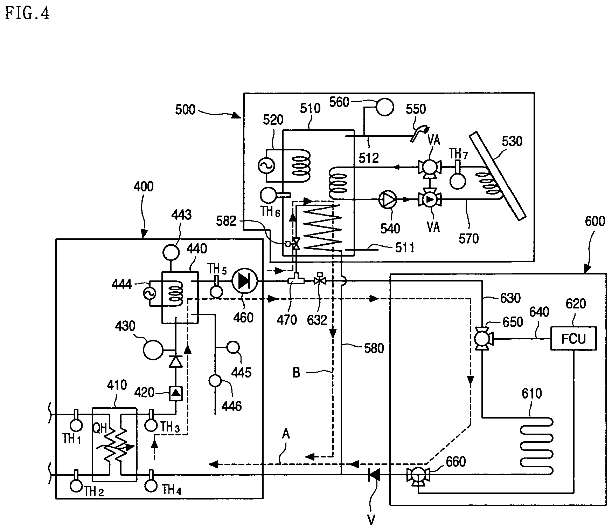

The following will describe the water-heat exchanger 400, hot water supply unit 500, and water-heat heating unit 600 in more detail with reference to FIG. 4.

FIG. 4 is a view illustrating the water-heat exchanger, hot water supply unit, and heating unit of the hot water circulation system associated with the heat pump.

The water-heat exchanger 400 is connected to a refrigerant pipe 402 for allowing the refrigerant discharged from the heat recovery unit 300 to be returned via the water-heat exchanger 400. The refrigerant pipe 402 passes through the water-refrigerant heat exchanger 410 for the heat exchange between the water and the refrigerant.

That is, the refrigerant pipe 402 connects the indoor gas pipe 212' to the indoor liquid pipe 210', thereby forming a closed-circuit.

Further, temperature sensors TH1 and TH2 are provided on the refrigerant pipe 402. That is, the temperature sensors TH1 and TH2 are respectively provided on inlet and outlet sides of the water-refrigerant heat exchanger 410.

The water-refrigerant heat exchanger 410 is for the heat exchange between the refrigerant flowing along the heat pump refrigerant cycle and the water flowing along a water pipe. A plate type heat exchanger may be used as the water-refrigerant heat exchanger 410.

The water-refrigerant heat exchanger 410 receives heat from the refrigerant introduced from the heat recovery unit 300 and heats the water.

In more detail, the water passing through the hot water supply unit 500 and the water-heat heating unit 600 is not warm enough. This water is further heated by receiving the heat from the refrigerant while flowing through the water-refrigerant heat exchanger 410.

Accordingly, temperature sensors TH3 and TH4 may be respectively mounted on a water pipe near an inlet and a water pipe near an outlet of the water-refrigerant heat exchanger 410.

A flow switch 420 detecting the flow of the water is provided above the temperature sensors TH3 and TH4. An expansion tank 430 is provided above the flow switch 420.

In addition, the expansion tank 430 functions to absorb excessive expansion of the water that is heated while passing through the water-refrigerant heat exchanger 410. A diaphragm is received in the expansion tank 430 to move in response to the volume variation of the water in the water pipes. In addition, the expansion tank 430 is filled with nitrogen gas.

A heater assembly 440 is provided above the expansion tank 430. In addition, the heater assembly 440 is designed to allow the water passing through the water-refrigerant heat exchanger 410 to be heated by a sub-heater 444. The sub-heater 444 selectively operates depending on an amount of intake heat through the water-refrigerant heat exchanger 410.

An air vent 443 is formed on an upper portion of the heater assembly 440 to allow over-heated air existing in the heater assembly 440 to be discharged. A pressure gauge 445 and a relief valve 446 are provided on a side of the heater assembly 440 to properly adjust internal pressure of the heater assembly 440.

For example, when water pressure displayed on the pressure gauge 445 is excessively high, the relief valve 446 is opened to properly adjust the internal pressure of the water-heater exchange indoor unit 400.

A temperature sensor TH5 for measuring the water passing through the sub-heater is provided at a right side of the sub-heater 444.

A water pump 460 is provided at a right side of the temperature sensor TH5. The water pump 46 pumps out the water discharged through the water pipe extending from the outlet of the heater assembly 440 and supplies the water to the hot water supply unit 500 and the water-heat heating unit 600.

Meanwhile, the hot water supply unit 500 heats and supplies the water used for washing user's face, dishwashing, and the like.

A branch pipe 470 is provided at a location spaced apart from the water pump 460 in a water flow direction to selectively direct the water pumped out by the water pump 460 toward the hot water supply unit 500 and the water-heat heating unit 600.

Accordingly, a hot water supply pipe 580 is connected to an upper portion of the branch pipe 470 to guide the water to the hot water supply unit 500 and a heating pipe 630 is connected to a right side of the branch pipe 470.

In addition, a heat valve 632 and a hot water supply valve 582 are respectively provided on the heating pipe 630 and the hot water supply pipe 580.

Accordingly, the water-heat heating unit 600 and the hot water supply unit 500 selectively operate depending operation states of the hot water supply valve 582 and heating valve 630.

The hot water supply unit 500 includes a hot water supply tank 510 storing therein the water supplied from an external side and a sub-heater 520 provided in the hot water supply tank 510.

A sub-heating source for supplying heat to the hot water supply tank 510 may be added depending on an installation state. A heat accumulation unit 530 using solar energy may be used as the sub-heating source. A water inlet portion 511 through which cold water is introduced and a water outlet portion 512 through which heated water is discharged are provided on a side of the hot water supply unit 500.

In more detail, a part of the hot water supply pipe extending from the branch pipe 470 further extends to the hot water supply tank 510 and heats the water stored in the hot water supply tank 510. That is, the heat is transferred from the high temperature water flowing along the hot water supply pipe 580 to the water stored in the hot water supply tank 510.

If necessary, the sub-heating source and the sub-heater may operate together to supply additional heat. For example, when there is a need to quickly heat the water, both of the sub-heating source and the sub-heater may operate. In addition, a temperature sensor TH6 may be mounted on a side of the hot water supply tank 510.

A hot water discharging unit such as a shower unit 550 or a humidifier 560 may be connected to the water outlet portion 512. When the heat accumulation unit 530 using the solar energy is used as the sub-heating source, a heat accumulation pipe 570 extending from the heat accumulation unit 530 may be inserted into the hot water supply tank 510. A sub-pump 540 for controlling a flow rate in the heat accumulation pipe circuit is mounted on the heat accumulation pipe 570. A directional valve VA may be mounted on the heat accumulation pipe 570 to control a flow direction of the water in the heat accumulation pipe 570. A temperature sensor TH7 may be mounted on a side of the heat accumulation pipe 57.

The sub-heating source is not limited to the heat accumulation unit using the solar energy in the present invention.

Meanwhile, the water-heat heating unit 600 includes a flow heating unit 610 defined by a part of the heating pipe 630 buried in an indoor floor and an air heating unit 620 branched off from a point of the heat pipe 630 and arranged in parallel with the floor heating unit 610.

In more detail, as shown in FIG. 4, the floor heating unit 610 may be buried in the indoor floor in the form of a meander line. The air heating unit 620 may be a fan coil unit or a radiator. A part of the air heating pipe 640 branched of from the heating pipe 630 is provided on the air heating unit 620 as a heat exchanging unit. Fluid direction valves 650 and 660 such as three-way valves are installed at a portion at which the air heating pipe 640 is branched off so that the refrigerant flowing along the heating pipe 630 can be selectively directed to both or one of the floor heating unit 610 and the air heating unit 620.

An end portion of the hot water supply pipe 580 extending from the branch pipe 470 merges with a location spaced apart from an outlet end of the air heating pipe 640 in the water flow direction. Therefore, in a hot water supply mode, the refrigerant flowing along the hot water supply pipe 580 is directed to the heating pipe 630 and then to the water-refrigerant heat exchanger 410.

Here, like the location where the hot water supply pipe 580 merges with the heating pipe 630, a check valve V is installed at a location that requires the backflow prevention to prevent the water from flowing backward. Likewise, check valves may be respectively installed at an outlet end of the air heating pipe 640 and an outlet end of the floor heating unit 610 in addition to the installation of the fluid directional valve 660.

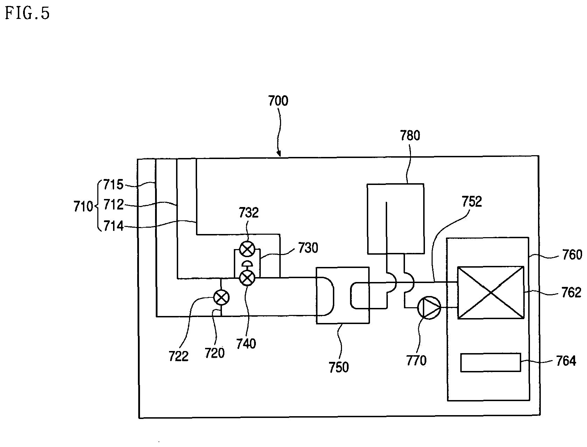

The following will describe the refrigerant heating unit in more detail with reference to FIG. 5.

FIG. 5 is a view of the refrigerant heating apparatus 700 of the hot water circulation system associated with the heat pump.

As shown in FIG. 5, the refrigerant heating apparatus 700 is connected to the heat pump refrigerant cycle to selectively heat the water for heating the refrigerant. A refrigerant circulation pipe 710 is provided at a left side of the inside of the refrigerant heating apparatus 700.

The refrigerant circulation pipe 710 communicates with the heat pump so that the refrigerant in the outdoor unit 100 circulates the inside of the refrigerant heating apparatus 700.

That is, the refrigerant circulation pipe 710 includes a first circulation pipe 712 connected to the first refrigerant pipe 162, a second circulation pipe 714 connected to the second refrigerant pipe 164, and a third circulation pipe 715 connected to the third refrigerant pipe 166.

The second circulation pipe 714 merges with the first circulation pipe 712 in the refrigerant heating apparatus 700 and the first and third circulation pipes 712 and 715 communicate with each other.

Accordingly, the refrigerant introduced into the first or second circulation pipes 712 or 714 is returned to the outdoor unit through the third circulation pipe 715. An overheating prevention pipe 720 is provided at a side of the first circulation pipe 712. The first and third circulation pipes 712 and 715 communicate with each other by the overheating prevention pipe 720. An overheating prevention valve 722 is provided at a side of the overheating prevention pipe 720.

The overheating prevention valve 722 selectively opens the overheating prevention pipe 720 to direct a part of the refrigerant introduced through the first circulation pipe 712 to the third circulation pipe 715, thereby preventing the refrigerant from being overheated in advance.

A recovery pipe 730 is provided at a side of the first circulation pipe 712. An opening/closing valve 732 is provided on the recovery pipe 730 to allow for selective refrigerant flow.

That is, a heating expansion valve 740 is provided at a lower portion of the recovery pipe 730. The heating expansion valve 740 expands the refrigerant when a refrigerant heating unit 750 is used as an evaporator.

Accordingly, when the refrigerant is introduced in a state where the opening/closing valve 732 closes the recovery pipe 730, the refrigerant may expand through the heating expansion valve 740.

The refrigerant heating unit 750 is provided at a central portion of the inside of the refrigerant heating apparatus 700. The refrigerant heating unit 750 may be a plate type heat exchanger for the heat exchange between the refrigerant circulating the refrigerant circulation pipe 710 and the water.

That is, a water heating passage 752 along which the water flows is coupled to an inner-right side of the refrigerant heating unit 750. The water heating passage 752 forms a closed-circuit so that the water heated by the water heating unit 760 can circulate along the water heating passage 752. The refrigerant and the water passing through the refrigerant heating unit 750 flows separately and heat-exchanges with each other, thereby heating the refrigerant.

To this end, a water heating unit 760 is provided at a right side of the heating expansion valve 740. The water heating unit 760 includes a water heating member 762 passing through the water heating passage 752 and a heating source 764 providing heat for the water heating member 762.

A variety of heating sources using gas, oil, electric heat, solar energy, ground source heat, and the like may be used as the heating source 764.

A water pump 770 for the forced circulation of the water in the water heating passage 752 is provided at a side of the water heating passage 764. Opposite ends of the water heating passage 752 communicate with the inside of the heating tank 780.

A predetermined level of the water is stored in the heating tank 780. The water in the heating tank 780 circulates the water heating passages 752.

Accordingly, heat of the water heated by the water heating unit 760 while flowing along the water heating passage 752 is stored in the heating tank 780.

The following will describe operation of the hot water circulation system associated with the heat pump.

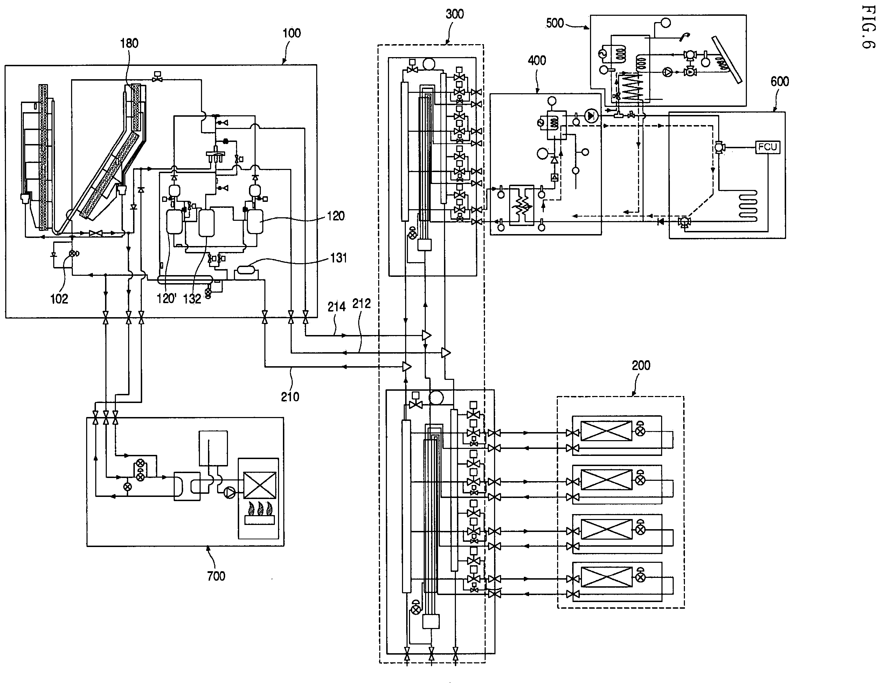

First, a process for heating air and floor and supplying hot water using both of the refrigerant heating apparatus 700 and the outdoor unit 100 in a cold front area will be described hereinafter with reference to FIG. 6.

At this point, the bypass guide valve 144, outdoor expansion valve 102, overheating prevention valve 722, hot water supplying valve 582, and heating valve 632 are in opened states and the overheating prevention valve 722 and opening/closing valve 732 are in closed states.

Describing the flow of the refrigerant in the outdoor unit 100, the refrigerant discharged from the compressors 120 and 120' is directed into the heat recovery unit 300 through the oil separator 122 and the high pressure gas pipe 214.

The main valves 330 of the heat recovery unit 300 are turned off and the sub-valves 332 are turned on. Therefore, the refrigerant directed to the heat recovery unit 300 through the high pressure gas pipe 214 is directed to the indoor gas pipe 212' through the branch pipe 340.

The refrigerant introduced into the indoor gas pipe 212' through the branch pipe 340 is supplied to the indoor unit 200 and condensed through heat exchange with the indoor air while passing through the indoor heat exchanger 202.

That is, in the heating mode, the indoor heat exchanger 202 functions as a condenser to heat the internal air by being heated. Since all of the expansion valves are opened, the refrigerant that is phase-changed into the liquid-phase refrigerant while passing through the indoor heat exchanger 202 is directed to the heat recovery unit 300 through the indoor liquid pipe 210'.

The liquid-phase refrigerant in the heat recovery unit 300 is introduced into the outdoor unit 100 through the liquid pipe 210. The refrigerant introduced into the outdoor unit 100 passes through the outdoor linear expansion valve 102 and is then directed to the outdoor heat exchanger 180. At this point, since the outdoor heat exchanger 180 functions as an evaporator, the liquid-phase refrigerant heat-exchanges with the outer air and thus is phased-changed into the gas-phase refrigerant.

The gas-phase low pressure refrigerant discharged from the outdoor heat exchanger 180 passes through the four-way valve and is then directed to the compressors 120 and 120' through the accumulator 132. The heating mode cycle is realized through the above-described processes.

Meanwhile, a part of the refrigerant passing through the outdoor over-cooler 130 is introduced into the refrigerant heating unit through the first circulation pipe.

At this point, the heating source 764 supplies heat to the water heating member 762 and thus the water circulating the heating tank 780 and the water heating member 762 is heated by the heat.

The heated water heat-exchanges with the refrigerant while passing through the refrigerant heating unit 750 to provide heat for the refrigerant.

The refrigerant heat-exchanging with the water in the refrigerant heating unit 750 is directed into the outdoor unit through the third circulation pipe 716.

Accordingly, the refrigerant that is quickly cooled by the indoor unit 200 in the cold front area is heated while passing through the refrigerant heating apparatus 700, thereby maximizing the heat exchange efficiency.

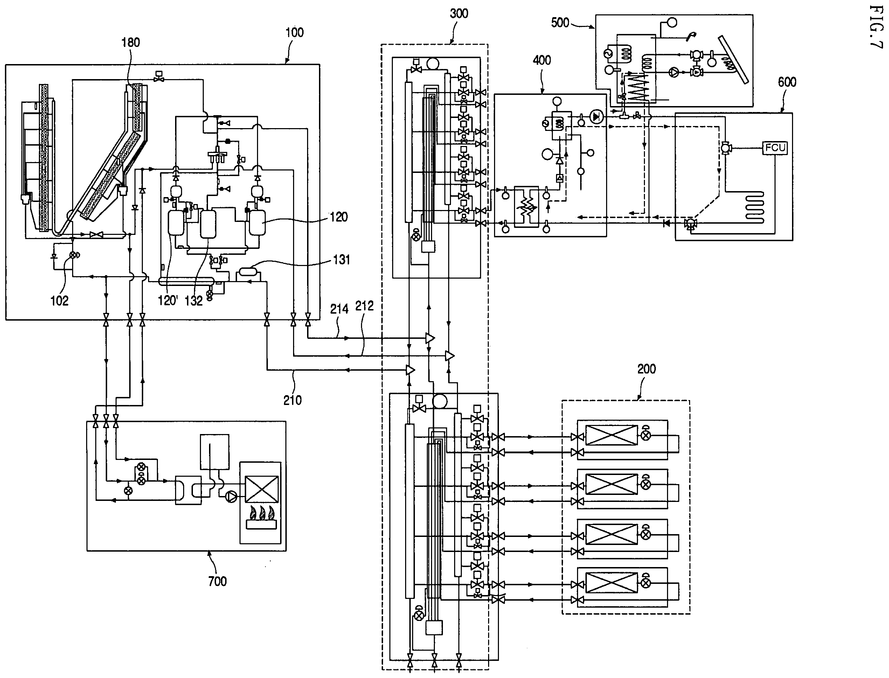

The following will describe in more detail flows of the refrigerant and water in the case where the indoor air is heated by shutting off the flow of the refrigerant into the outdoor heat exchanger 180 and operating the refrigerant heating apparatus 700 with reference to FIG. 7.

At this point, the hot water supply valve 582 and heating valve 632 are in closed states and the bypass guide valve 144 an the outdoor linear expansion valve 12 are in closed states.

The indoor heat exchanger 202 functions as a condenser to heat the internal air by being heated. Since the expansion valves 204 are opened, the refrigerant that is phase-changed into the liquid-phase refrigerant while passing through the indoor heat exchanger 202 is directed to the heat recovery unit 300 through the indoor liquid pipe 210'.

The liquid-phase refrigerant in the heat recovery unit 300 is introduced into the outdoor unit 100 through the liquid pipe 210. Since the outdoor linear expansion valve 102 is in the closed state, the refrigerant is directed to the refrigerant heating apparatus 700 through the first refrigerant pipe 162.

The refrigerant introduced into the refrigerant heating apparatus 700 expands while passing through the heating expansion valve 740. At this point, the heating source 764 provides heat for the water heating member 762. In addition, the water circulating the heating tank 780 and the water heating member 762 is heated by the heat.

The heated water heat-exchanges with the refrigerant while passing through the refrigerant heating unit 750.

The refrigerant heat-exchanging with the water in the refrigerant heating unit 750 is phase-changed into gas-phase refrigerant and then supplied to the outdoor unit through the third circulation pipe.

The refrigerant introduced into the outdoor unit is supplied to the compressors 120 and 120' through the third refrigerant pipe 166, the third check valve 167, and the four-way valve. The heating cycle is formed through the above-described processes.

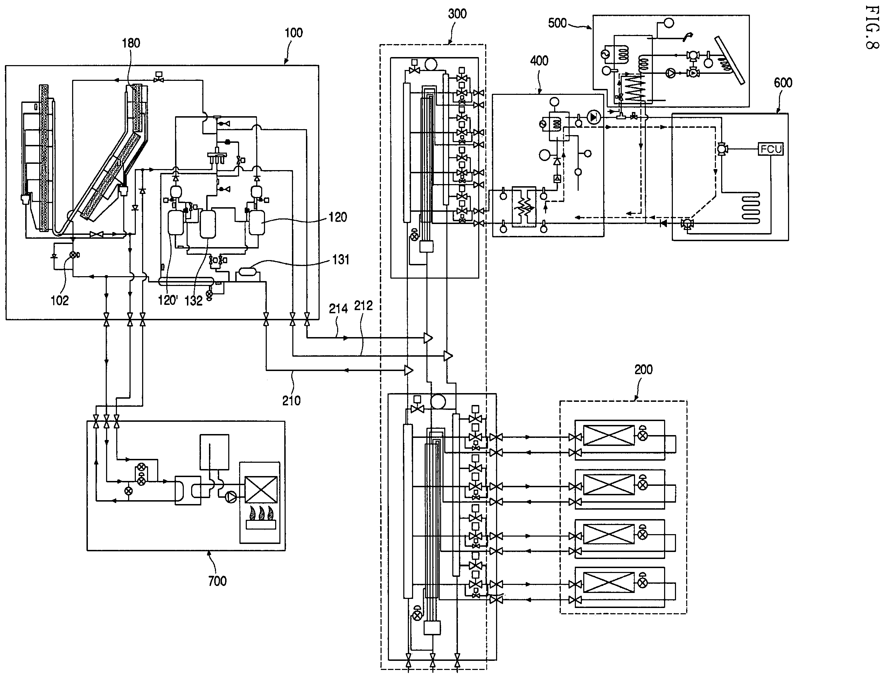

The following will describe flows of the refrigerant and water in a defrosting mode using a heat pump refrigerant cycle, which is used when the outdoor heat exchanger 180 is frozen during the heating mode with reference to FIG. 8.

In the heating mode using the heat pump refrigerant cycle, the bypass guide valve 144 and outdoor linear expansion valve 102 are opened and the heating expansion valve 740, the overheating prevention valve 722 and the bypass valve 142 are closed.

When the heating mode is performed, the outdoor heat exchanger 180 installed at an outdoor side is frozen and thus the heat exchange efficiency is deteriorated. Therefore, in order to improve the heat exchange efficiency, the defrosting mode is performed.

At this point, the bypass guide valve 144 and the outdoor linear expansion valve 102 are closed and the bypass valve 142 is opened. In addition, the heating source 764 operates to heat the water heating member 762. The water circulating the refrigerant heating apparatus 700 is heated and thus the water heating unit 760 operates as an evaporator.

Further, the pressure of the refrigerant measured by the high pressure sensor 126 is less than the target pressure and thus the bypass valve 142 is opened to increase the pressure of the refrigerant to the target pressure.

Describing the refrigerant flow with reference to FIG. 8, since the bypass valve 142 is opened, a part of the refrigerant compressed in the compressors is introduced into the outdoor discharge pipe 148 through the bypass pipe 140.

Since the bypass guide valve 144 is closed, the high temperature/high pressure refrigerant introduced into the outdoor discharge pipe 148.

At this point, the outdoor heat exchanger 180 is quickly defrosted by the high temperature/high pressure refrigerant and the refrigerant is condensed.

After the above, since the outdoor linear expansion valve 102 is closed, the condensed refrigerant passing through the outdoor heat exchanger 180 further passes through the first check valve 199.

Next, the refrigerant is introduced into the refrigerant heating apparatus 700 through the first circulation pipe 712 and the first refrigerant pipe 162. The refrigerant introduced into the refrigerant heating apparatus 700 expands in the heating expansion valve 740 and heat-exchanges with the water while passing through the refrigerant heating unit 750, thereby being evaporated.

The refrigerant evaporated by the refrigerant heating unit 750 is introduced into the four-way valve 124 through the third circulation pipe 715 and the third refrigerant pipe 166 and then recovered to the compressor 120 via the accumulator 132.

Meanwhile, a part of the refrigerant compressed in the compressors 120 and 120' is directed to the indoor unit 200 and/or the water-heat exchanger 400 through the heat recovery unit 300.

That is, in the hot water circulation system associated with a heat pump according to one embodiment, the indoor air, floor, and hot water supply can be simultaneously or selectively realized even during the defrosting of the outdoor heat exchanger 180.

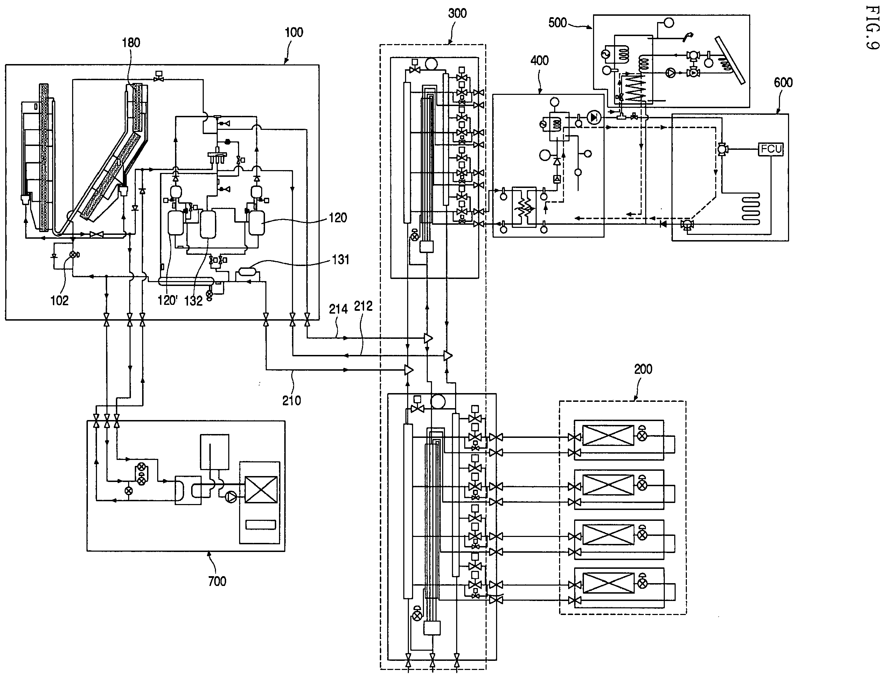

The following will describe a process for performing the heating mode using only the outdoor unit 100 without using the refrigerant heating apparatus 700 with reference to FIG. 9.

At this point, the refrigerant heating apparatus 700 allows the refrigerant to circulate without being heated.

To this end, the overheating prevention valve 722, bypass valve 142, and heating expansion valve 740 are closed and opening/closing valve 732, bypass guide valve 144 and outdoor linear expansion valve 102 are opened.

Accordingly, the flow of the refrigerant compressed in the compressor 120 is controlled by the heat recovery unit 300. The refrigerant is condensed while passing through the indoor unit 200 and/or the water-heat exchange unit 400.

The condensed refrigerant is introduced into the outdoor unit 100 via the heat recovery unit 300 and expands by the outdoor linear expansion valve 102. The refrigerant is evaporated while passing through the outdoor heat exchanger 180 and passes through the accumulator 132 and the compressor 120.

Meanwhile, a part of the refrigerant introduced into the outdoor unit 100 is not directed to the outdoor heat exchanger 180 but directed into the refrigerant heating apparatus 700 through the first refrigerant pipe 162.

Since the overheating prevention pipe 720 and the heating expansion valve 740 are closed, the refrigerant directed into the refrigerant heating apparatus 700 is confined in the first circulation pipe 712.

On the other hand, the refrigerant that is evaporated while passing through the outdoor heat exchanger 180 is introduced into the refrigerant heating apparatus 700 through the second refrigerant pipe 164 and the second circulation pipe 714 and passes through the refrigerant heating unit 750 without heat exchange.

After the above, the refrigerant gets out of the refrigerant heating apparatus 700 through the third circulation pipe 715 and is then directed into the compressor 120 through the third refrigerant pipe 166 via the four-way valve 124 and the accumulator 132.

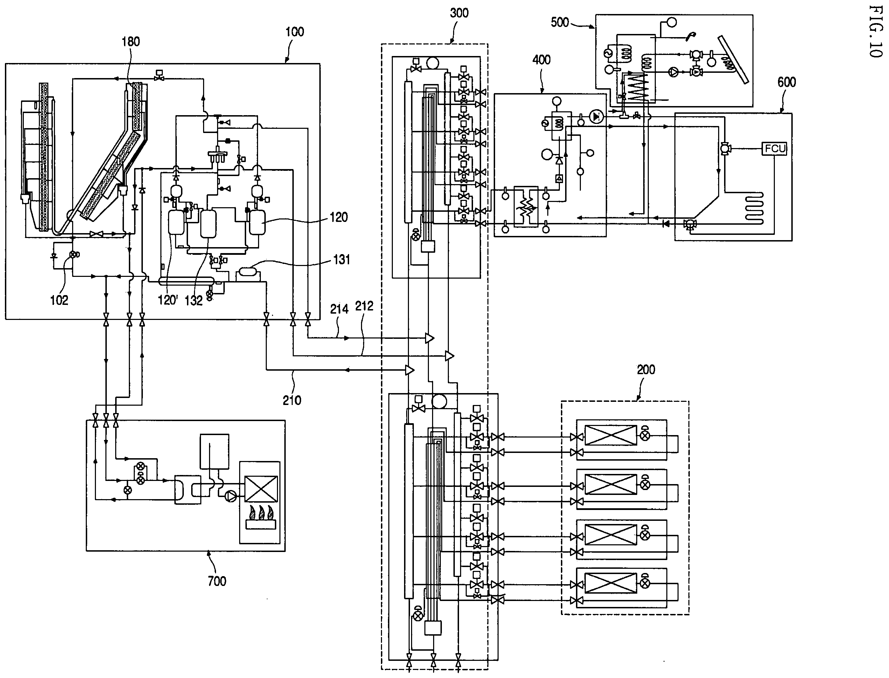

The following will describe flow of the refrigerant in the heating mode using only the refrigerant heating apparatus 700 after the system has been left off for a long time with reference to FIG. 10.

The bypass guide valve 144 and the outdoor linear expansion valve 102 are opened and the bypass valve 142, the heating expansion valve 740, and the overheating prevention valve 722 are closed. The heating source 764 operates to heat the water heating member 762.

At this point, the refrigerant compressed in the compressor 100 is directed into the outdoor unit 100 via the heat recovery unit 30.0 and the indoor unit 200 and passes through the outdoor linear expansion valve 102 and the outdoor heat exchanger 180.

However, when the outdoor heat exchanger 180 is left off for a long time, the refrigerant stays in the outdoor heat exchanger 180 for a long time. In addition, when only the refrigerant heating apparatus 700 is used without using the outdoor heat exchanger 180, the system may suffer from a shortage of the refrigerant.

Accordingly, the high temperature/high pressure compressed refrigerant is directed to the outdoor heat exchanger 180 through the bypass pipe 140.

To this end, the bypass guide valve 144 and the outdoor linear expansion valve 103 are closed to shut off the refrigerant flow and the bypass valve 142 is opened.

Accordingly, a part of the refrigerant compressed in the compressor 120 is directed to the outdoor discharge pipe 148 through the bypass pipe 140. Since the bypass guide valve 144 and the outdoor linear expansion valve 102 are closed, the refrigerant 180 passes through the first check valve 199.

After the above, the refrigerant is directed into the refrigerant heating apparatus 700 through the first refrigerant pipe 162 and passes through the refrigerant heating unit 750 through the first and third circulation pipes 712 and 715 to be heated to a refrigerant temperature that can maximize the heating efficiency.

Next, the refrigerant is introduced into the third refrigerant pipe 166 and passes through the third check valve 167, after which the refrigerant further passes through the four-way valve 124, the accumulator 132, and the compressor 120.

Meanwhile, a part of the refrigerant passing through the third check valve 167 is not directed to the four-way valve 124 but passes through the second check valve 165.

After the above, since the bypass guide valve 144 is closed, the refrigerant is introduced the refrigerant heating apparatus 700 through the second refrigerant pipe 164.

The refrigerant introduced into the refrigerant heating apparatus 700 flows along the second circulation pipe 714 and merges with thee first circulation pipe 712, after which the refrigerant is heated while passing through the refrigerant heating unit 750 and then directed to the outdoor unit.

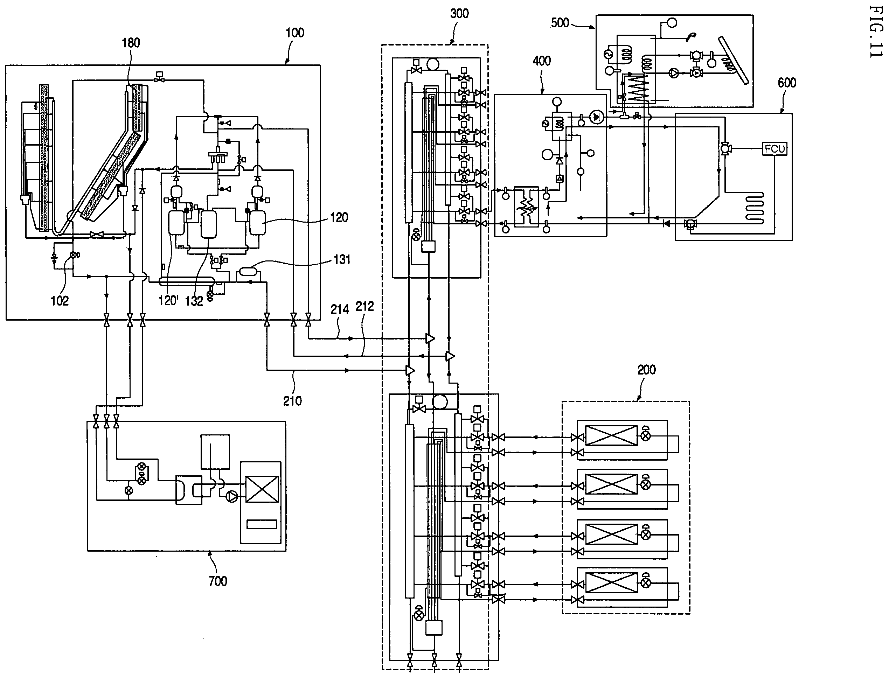

The following will describe flow of the refrigerant in a cooling mode using only the heat pump refrigerant cycle of the hot water circulation system associated with the heat pump with reference to FIG. 11.

When the hot water circulation system associated with the heat pump operates with a cooling mode, the refrigerant heating apparatus 700 is not used. That is, no refrigerant is directed to the refrigerant heating apparatus 700.

Accordingly, the opening/closing valve 732, overheating prevention valve 722, heating expansion valve 740, bypass valve 142, and outdoor linear expansion valve 102 are closed and the bypass guide valve 144 is opened.

The high temperature/high pressure refrigerant compressed by the compressors 120 and 120' is directed to the second check valve 165 via the four-way valve 124.

In addition, the refrigerant returned to the outdoor unit is not directed to the refrigerant heating apparatus 700 by the third check valve 167.

Since the opening/closing valve 732, overheating prevention valve 722, and heating expansion valve 740 are closed, the refrigerant cannot be directed to the refrigerant heating apparatus 700 and condensed while passing through the outdoor heat exchanger 180 via the bypass guide valve 144 that is opened.

After the above, the refrigerant is directed to the heat recovery unit 300 via the first check valve 199. The heat recovery unit 300 guides the refrigerant to the indoor unit or the water-heat exchanger 400.

Next, the refrigerant introduced into the outdoor unit 100 is directed into the compressors 120 and 120' via the four-way valve 124 and the accumulator 132 and compressed in the compressors 120 and 120'.

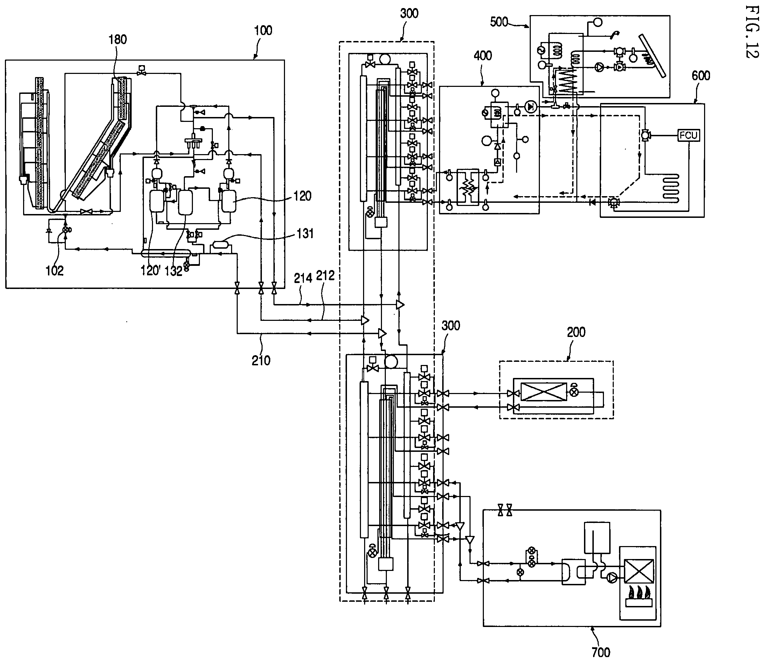

Although the refrigerant heating apparatus 700 is linearly connected to the outdoor unit 100 in the present embodiment, the present invention is not limited to this. That is, as shown in FIG. 12, the refrigerant heating apparatus 700 may be connected to the heat recovery unit 300.

According to the embodiment, the floor heating, hot water supply, and simultaneous multi-space heating can be simultaneously performed and thus the heat exchange efficiency can be maximized by heating the refrigerant by selectively operating the refrigerant heating apparatus when an external temperature is extremely low.

Although embodiments have been described with reference to a number of illustrative embodiments thereof, it should be understood that numerous other modifications and embodiments can be devised by those skilled in the art that will fall within the scope of the principles of this disclosure as defined by the claims. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A hot water circulation system including a heat pump, comprising:
an outdoor unit (100) comprising a heat pump refrigerant cycle, which includes a compressor (120, 120') and an outdoor heat exchanger (180); an indoor unit (200) in which refrigerant is heat-exchanged with indoor air, for air-conditioning an indoor space; and a refrigerant heating apparatus (700) that is selectively connected to the outdoor unit (100) and heats the refrigerant in the heat pump refrigerant cycle, wherein the refrigerant heating apparatus (700) heats the refrigerant by heating the water circulating in a water heating passage (752), which is a closed-circuit along which the water circulates, using a heating source and allowing the heated water to exchange heat with the refrigerant in the heat pump refrigerant cycle,
**characterized in that**:
the hot water circulation system further comprises a refrigerant heating pipe (160) for selectively guiding flow of the refrigerant between the outdoor unit (100) and the refrigerant heating apparatus (700), said refrigerant heating pipe (160) comprising: first and second refrigerant pipes (162, 164) for directing the refrigerant from the outdoor unit (100) into the refrigerant heating apparatus (700); and
a third refrigerant pipe (166) for directing the refrigerant from the refrigerant heating apparatus (700) to the outdoor unit (100).

2. The hot water circulation system according to claim 1, further comprising a check valve (167) that is provided on the third refrigerant pipe (166) to prevent the refrigerant from being directed into the refrigerant heating apparatus in a cooling mode of the heat pump refrigerant cycle.

3. The hot water circulation system according to claim 2, the outdoor unit further comprising:
an outdoor discharge pipe (148) configured to guide the refrigerant discharged from the outdoor heat exchanger (180) to a four-way valve (124), which is installed to switch a flow direction of the refrigerant depending on the operation mode, the four ports of said four-way valve being respectively connected to an outlet an inlet of the compressors (120,120'), the outdoor heat exchanger (180), and the indoor unit (200);
a bypass guide valve (144) installed at the outdoor discharge pipe (148), for selectively cutting off the flow of the refrigerant in the indoor unit when the refrigerant heating apparatus operates.

4. The hot water circulation system according to claim 3, further comprising a bypass pipe (140) provided between the outdoor heat exchanger (180) and the four-way valve (124), for directing the refrigerant to the outdoor heat exchanger (180), wherein the bypass guide valve (144) is closed when the bypass pipe (140) is opened.

5. The hot water circulation system according to claim 4, wherein the bypass pipe (140) is selectively opened in a defrosting mode of the heat pump refrigerant cycle and a heating mode after being left off for a long time in the extreme cold front area.

6. The hot water circulation system according to claim 5, further comprising a second check valve (165) that directs the refrigerant to the refrigerant heating apparatus when the bypass guide valve is opened.

7. The hot water circulation system according to claim 6, wherein a high pressure sensor (125) for measuring pressure of the refrigerant is provided at an outlet side of a compressor (120, 120') for compressing the refrigerant, and the bypass pipe (140) is opened when the pressure measured by the high pressure sensor is less than target pressure.

8. The hot water circulation system according to claim 1, wherein the refrigerant heating apparatus (700) comprises:
a refrigerant heating unit (750) for heat exchange between the refrigerant and the water;
a water heating unit (760) for heating the water;
a heating tank (780) for storing the water heated by the water heating unit; and
a water heating passage (752) for forming a closed-circuit along which the water heated by the water heating unit circulates.

9. The hot water circulation system according to claim 8, wherein the water heating unit (750) comprises:
a water heating member (762) passing through the water hating passage (752); and
a heat source for providing heat for the water heating member.

10. The hot water circulation system according to claim 9, further comprising:
a heat recovery unit (300) disposed between the outdoor unit (100) and the indoor unit (200) arranged to control the flow of the refrigerant;
a water-heat exchanger (400) for heat exchange between the refrigerant and the water;
a hot water supply unit (500) for generating hot water by allowing the water passing through the water-heat exchanger to circulate therein; and
a water-heat heating unit (600) for allowing the water passing through the water-heat exchanger (400) to circulate a wall or floor of the indoor space.

11. The hot water circulation system according to claim 10, wherein the water-heat exchanger (400) comprises:
a water-refrigerant heat exchanger (410) for heat exchange between the water and the refrigerant; and
a water pump (460) for forced circulation of the water in the hot water supply unit (500) and the water-heat heating unit (600).

12. The hot water circulation system according to claim 10, the water-heat heating unit (600) comprises:
a floor heating unit (610) configured to heat a floor of the indoor space; and
an air heating unit (620) that is connected to the floor heating unit and arranged in parallel with the floor heating unit to heat the indoor air, the air heating unit being a fan coil unit or a radiator.

## Patentansprüche

1. Warmwasserzirkulationssystem mit Wärmepumpe, das aufweist:
eine Außenbereichseinheit (100), die einen Wärmepumpenkältemittelkreislauf aufweist, der einen Kompressor (120, 120') und einen Außenbereichswärmetauscher (180) umfasst; eine Innenraumeinheit (200) zur Klimatisierung eines Innenraums, in der ein Kältemittel mit der Innenraumluft Wärme austauscht; und
eine Kältemittelheizvorrichtung (700), die selektiv mit der Außenbereichseinheit (100) verbunden ist und das Kältemittel in dem Wärmepumpenkältemittelkreislauf erwärmt, wobei die Kältemittelheizvorrichtung (700) das Kältemittel durch Erwärmen des Wassers, das in einem Wasserheizkanal (752) zirkuliert, der einen geschlossenen Kreislauf bildet, entlang dem das Wasser zirkuliert, unter Verwendung einer Wärmequelle erwärmt, wobei das erwärmte Wasser mit dem Kältemittel im Wärmepumpenkältemittelkreislauf Wärme austauschen kann;
**dadurch gekennzeichnet, dass**:
das Warmwasserzirkulationssystem ferner eine Kältemittelheizleitung (160) aufweist, um den Fluss des Kältemittels selektiv zwischen der Außenbereichseinheit (100) und der Kältemittelheizvorrichtung (700) zu führen, wobei die Kältemittelheizleitung (160) umfasst:
eine erste und eine zweite Kältemittelleitung (162, 164), um das Kältemittel von der Außenbereichseinheit (100) in die Kältemittelheizvorrichtung (700) zu führen; und
eine dritte Kältemittelleitung (166), um das Kältemittel von der Kältemittelheizvorrichtung (700) zu der Außenbereichseinheit (100) zu führen.

2. Warmwasserzirkulationssystem nach Anspruch 1, das ferner ein Rückschlagventil (167) aufweist, das an der dritten Kältemittelleitung (166) angeordnet ist, um zu verhindern, dass das Kältemittel in einem Kühlmodus des Wärmepumpenkältemittelkreislaufs in die Kältemittelheizvorrichtung geleitet wird.

3. Warmwasserzirkulationssystem nach Anspruch 2, wobei die Außenbereichseinheit ferner aufweist:
eine Außenbereichsabflussleitung (148), die zum Führen des von dem Außenbereichswärmetauscher (180) abgegebenen Kältemittels zu einem Vierwegeventil (124) ausgebildet ist, das zum Umschalten einer Flussrichtung des Kältemittels in Abhängigkeit des Betriebsmodus montiert ist, wobei die vier Anschlüsse des Vierwegeventils mit einem Auslass bzw. Einlass der Kompressoren (120, 120'), des Außenbereichswärmetauschers (180) und der Innenraumeinheit (200) verbunden sind;
ein Bypassführungsventil (144), das an der Außenbereichsabflussleitung (148) angeordnet ist, um den Kältemittelfluss in der Innenraumeinheit selektiv zu unterbrechen, wenn die Kältemittelheizvorrichtung in Betrieb ist.

4. Warmwasserzirkulationssystem nach Anspruch 3, das ferner eine Bypassleitung (140) aufweist, die zwischen dem Außenbereichswärmetauscher (180) und dem Vierwegeventil (124) angeordnet ist, um das Kältemittel zu dem Außenbereichswärmetauscher (180) zu leiten, wobei das Bypassführungsventil (144) geschlossen ist, wenn die Bypassleitung (140) offen ist.

5. Warmwasserzirkulationssystem nach Anspruch 4, wobei die Bypassleitung (140) in einem Entfrostungsmodus des Wärmepumpenkältemittelkreislaufs und in einem Heizmodus, nachdem es für lange Zeit in dem extrem kalten Frontbereich belassen wurde, selektiv geöffnet wird.

6. Warmwasserzirkulationssystem nach Anspruch 5, das ferner ein zweites Rückschlagventil (165) aufweist, das das Kältemittel zu der Kältemittelheizvorrichtung leitet, wenn das Bypassführungsventil geöffnet ist.

7. Warmwasserzirkulationssystem nach Anspruch 6, wobei ein Hochdrucksensor (125) zum Messen des Drucks des Kältemittels an einer Auslassseite eines Kompressors (120, 120') zum Komprimieren des Kältemittels vorgesehen ist und die Bypassleitung (140) geöffnet ist, wenn der von dem Hochdrucksensor gemessene Druck niedriger als ein Solldruck ist.

8. Warmwasserzirkulationssystem nach Anspruch 1, wobei die Kältemittelheizvorrichtung (700) aufweist:
eine Kältemittelheizeinheit (750) zum Austauschen von Wärme zwischen dem Kältemittel und dem Wasser;
eine Wasserheizeinheit (760) zum Erwärmen des Wassers;
einen Heiztank (780) zum Speichern des von der Wasserheizeinheit erwärmten Wassers; und
einen Wasserheizkanal (752) zum Bilden eines geschlossenen Kreislaufs, entlang dem das von der Wasserheizeinheit erwärmte Wasser zirkuliert.

9. Warmwasserzirkulationssystem nach Anspruch 8, wobei die Wasserheizeinheit (750) aufweist:
ein Wasserheizelement (762), das durch den Wasserheizkanal (752) hindurchgeführt ist; und
eine Wärmequelle, um Wärme für das Wasserheizelement bereitzustellen.

10. Warmwasserzirkulationssystem nach Anspruch 9, das ferner aufweist:
eine Wärmerückgewinnungseinheit (300), die zwischen der Außenbereichseinheit (100) und der Innenraumeinheit (200) angeordnet und zum Steuern des Kältemittelflusses ausgebildet ist;
einen Wasser-Wärmetauscher (400) zum Austauschen von Wärme zwischen dem Kältemittel und dem Wasser;
eine Warmwasserversorgungseinheit (500) zum Erzeugen von heißem Wasser, indem das Wasser, das durch den Wasser-Wärmetauscher strömt, darin zirkulieren kann; und
eine Wasser-Wärme-Heizeinheit (600), damit das Wasser, das durch den Wasser-Wärmetauscher (400) strömt, durch eine Wand oder einen Boden des Innenraums zirkulieren kann.

11. Warmwasserzirkulationssystem nach Anspruch 10, wobei der Wasser-Wärmetauscher (400) aufweist:
einen Wasser-Kältemittel-Wärmetauscher (410) zum Austauschen von Wärme zwischen dem Wasser und dem Kältemittel; und
eine Wasserpumpe (460) zur Zwangsumwälzung des Wassers in der Warmwasserversorgungseinheit (500) und der Wasser-Wärme-Heizeinheit (600).

12. Warmwasserzirkulationssystem nach Anspruch 10, wobei die Wasser-Wärme-Heizeinheit (600) aufweist:
eine Bodenheizeinheit (610), die zum Erwärmen eines Bodens des Innenraums ausgebildet ist; und
eine Luftheizeinheit (620), die mit der Bodenheizeinheit verbunden und parallel zu der Bodenheizeinheit angeordnet ist, um die Innenraumluft zu erwärmen, wobei es sich bei der Luftheizeinheit um einen Gebläsekonvektor oder Radiator handelt.

## Revendications

1. Système de circulation d'eau chaude comprenant une pompe à chaleur, comprenant :
une unité d'extérieur (100) comprenant un cycle de réfrigérant de pompe à chaleur, qui comprend un compresseur (120, 120') et un échangeur thermique d'extérieur (180) ; une unité d'intérieur (200) dans laquelle le réfrigérant subi un échange thermique avec l'air intérieur, afin de climatiser un espace intérieur ; et un appareil de chauffage de réfrigérant (700) qui est sélectivement relié à l'unité d'extérieur (100) et chauffe le réfrigérant pendant le cycle de réfrigérant de pompe à chaleur, dans lequel l'appareil de chauffage de réfrigérant (700) chauffe le réfrigérant en chauffant l'eau qui circule dans un passage de chauffage d'eau (752), qui est un circuit fermé le long duquel circule l'eau, en utilisant une source de chauffage et en permettant à l'eau chauffée d'échanger de la chaleur avec le réfrigérant pendant le cycle de réfrigérant de pompe à chaleur,
**caractérisé en ce que** :
le système de circulation d'eau chaude comprend en outre un tuyau de chauffage de réfrigérant (160) destiné à guider sélectivement l'écoulement de réfrigérant entre l'unité d'extérieur (100) et l'appareil de chauffage de réfrigérant (700), ledit tuyau de chauffage de réfrigérant (160) comprenant :
un premier et un second tuyaux de réfrigérant (162, 164) destinés à orienter le réfrigérant entre l'unité d'extérieur (100) et l'appareil de chauffage de réfrigérant (700) ; et
un troisième tuyau de réfrigérant (166) destiné à orienter le réfrigérant entre l'appareil de chauffage de réfrigérant (700) et l'unité d'extérieur (100).

2. Système de circulation d'eau chaude selon la revendication 1, comprenant en outre un clapet anti-retour (167) qui est prévu sur le troisième tuyau de réfrigérant (166) afin d'empêcher le réfrigérant d'être orienté vers l'appareil de chauffage de réfrigérant en mode de refroidissement du cycle de réfrigérant de pompe à chaleur.

3. Système de circulation d'eau chaude selon la revendication 2, l'unité d'extérieur comprenant en outre :
un tuyau d'évacuation d'extérieur (148) configuré pour orienter le réfrigérant évacué de l'échangeur thermique d'extérieur (180) vers un clapet à quatre voies (124), qui est installé pour déclencher une direction d'écoulement du réfrigérant selon le mode de fonctionnement, les quatre ports dudit clapet à quatre voies étant respectivement reliés à une sortie et une entrée des compresseurs (120, 120'), de l'échangeur thermique d'extérieur (180), et de l'unité d'intérieur (200) ;
une soupape de dérivation de guidage (144) installée au niveau du tuyau d'évacuation d'extérieur (148), afin de couper sélectivement l'écoulement de réfrigérant dans l'unité d'intérieur lorsque l'appareil de chauffage de réfrigérant fonctionne.

4. Système de circulation d'eau chaude selon la revendication 3, comprenant en outre un tuyau de dérivation (140) prévu entre l'échangeur thermique d'extérieur (180) et le clapet à quatre voies (124), afin d'orienter le réfrigérant vers l'échangeur thermique d'extérieur (180), dans lequel la soupape de dérivation de guidage (144) est fermée lorsque le tuyau de dérivation (140) est ouvert.

5. Système de circulation d'eau chaude selon la revendication 4, dans lequel le tuyau de dérivation (140) est sélectivement ouvert en mode de dégel du cycle de réfrigérant de pompe à chaleur et un mode de chauffage après être resté coupé pendant une longue durée dans la zone avant de froid extrême.

6. Système de circulation d'eau chaude selon la revendication 5, comprenant en outre un second clapet anti-retour (165) qui oriente le réfrigérant vers l'appareil de chauffage de réfrigérant lorsque la soupape de dérivation de guidage est ouverte.

7. Système de circulation d'eau chaude selon la revendication 6, dans lequel un capteur de haute pression (125) destiné à mesurer la pression du réfrigérant est prévu au niveau d'un côté de sortie d'un compresseur (120, 120') destiné à comprimer le réfrigérant, et le clapet anti-retour (140) est ouvert lorsque la pression mesurée par le capteur de haute pression est inférieure à la pression cible.

8. Système de circulation d'eau chaude selon la revendication 1, dans lequel l'appareil de chauffage de réfrigérant (700) comprend :
une unité de chauffage de réfrigérant (750) destinée à un échange thermique entre le réfrigérant et l'eau ;
une unité de chauffage de l'eau (760) destinée à chauffer l'eau ;
une cuve de chauffage (780) destinée à stocker l'eau chauffée par l'unité de chauffage de l'eau ; et
un passage de chauffage de l'eau (752) destiné à former un circuit fermé le long duquel circule l'eau chauffée par l'unité de chauffage de l'eau.

9. Système de circulation d'eau chaude selon la revendication 8, dans lequel l'unité de chauffage de l'eau (750) comprend :
un élément de chauffage de l'eau (762) qui passe par le passage de chauffage de l'eau (752) ; et
une source de chaleur destinée à fournir de la chaleur à l'élément de chauffage de l'eau.

10. Système de circulation d'eau chaude selon la revendication 9, comprenant en outre :
une unité de récupération de chaleur (300) disposée entre l'unité d'extérieur (100) et l'unité d'intérieur (200) et prévue pour contrôler l'écoulement de réfrigérant ;
un échangeur eau/chaleur (400) destiné à échanger de la chaleur entre le réfrigérant et l'eau ;
une unité d'alimentation en eau chaude (500) destinée à générer de l'eau chaude en permettant à l'eau qui passe par l'échangeur eau/chaleur de circuler à l'intérieur ; et
une unité de chauffage eau/chaleur (600) destinée à permettre à l'eau qui passe par l'échangeur eau/chaleur (400) de circuler dans une paroi ou le sol de l'espace intérieur.

11. Système de circulation d'eau chaude selon la revendication 10, dans lequel l'échangeur eau/chaleur (400) comprend :
un échangeur thermique eau/réfrigérant (410) destiné à un échange de chaleur entre l'eau et le réfrigérant ; et
une pompe à eau (460) destinée à la circulation forcée de l'eau dans l'unité d'alimentation en eau chaude (500) et l'unité de chauffage eau/chaleur (600).

12. Système de circulation d'eau chaude selon la revendication 10, l'unité de chauffage eau/chaleur (600) comprenant :
une unité de chauffage de sol (610) configurée pour chauffer un sol de l'espace intérieur ; et
une unité de chauffage de l'air (620) qui est reliée à l'unité de chauffage du sol et prévue en parallèle avec l'unité de chauffage du sol afin de chauffer l'air intérieur, l'unité de chauffage de l'air étant une unité de ventilo-convecteur ou un radiateur.
